# EUROPEAN PATENT SPECIFICATION

(11) **EP 4 048 066 B1**
(45) Date of publication and mention of the grant of the patent: **12.03.2025**
(21) Application number: 20786090.9
(22) Date of filing: 02.10.2020
(51) Int. Cl.: A01K 13/00, A45D 8/00, A45D 8/02

(54) **EQUINE GROOMING DEVICE**
VORRICHTUNG ZUR PFLEGE VON PFERDEN
DISPOSITIF DE TOILETTAGE DE CHEVAUX

(30) Priority: 24.10.2019 NL 2024093
(43) Date of publication of application: 31.08.2022
(73) Proprietor: HES-TEC B.V., 5221 KB 's-Hertogenbosch (NL)
(72) Inventor: KELDERS, Johannes Hubertus Jozef Maria, 5221 KB 's-Hertogenbosch (NL); SAMUELS, Erwin Lambertus Leonardus, 5221 KB 's-Hertogenbosch (NL); VAN HELVERT, Frank, 5221 KB 's-Hertogenbosch (NL)
(74) Representative: Patentwerk B.V.
(86) International application number: PCT/NL2020/050608
(87) International publication number: WO 2021/080418

(56) References cited:
- EP-A1- 3 456 187
- DE-U1- 29 709 175
- US-A1- 2006 174 908

## Description

The present invention relates to an equine grooming device configured for keeping a horse mane's braid in a rolled up or folded knot.

Traditionally the mane of horses are braided, or plaited, before a competition. Braided or plaited mane have a positive influence on the aesthetic appearance of the horse, but they also prevent disturbance of the rider due to lose mane and they prevent that mane get tangled out. A benefit of providing braids in the mane of a horse is that they may accentuate the curvature of the horse's neck, which for example during dressage normally will improve the overall appearance of the horse and rider. At some type of competitions, such as showing or hunter classes, it may even be mandatory to present the horse with braided mane. Also at some type of competitions grooms are awarded for their braids.

Braiding a horse in the conventional way starts for example with dividing the mane into various sections depending on the desired number of braids. Each section of hair is for instance divided into three equal smaller sections, or strands, and the hair is braided all the way down. Preferably the braid is fastened with an elastic band, for example a rubber or silicone plaiting band. Subsequently, the braid is folded or rolled up into a knot. Conventionally the knot is fastened either by using an elastic band or by using needle and thread or yarn. However, the conventional methods of braiding mane of a horse are not only time consuming, but have several other drawbacks. When fastening the knot with the use of an elastic band it is difficult to obtain the ideal degree of tightening of the knot. The knot is either too loose, resulting in braids popping out of the knots when the horse stretches his neck or when the riders rubs over the mane while riding. Another possibility with using elastic bands is that the knots are fastened too tight, resulting in that hairs will be pulled out by the created tension. Furthermore, it is usually difficult to remove the elastic bands after use without damaging the mane. The last mentioned problem is also known for the method where the fastening of the knots is done by using needle and thread. As the thread is sewed through the mane, in particular through the braid, it is almost impossible to remove the thread without using scissors. A risk of using is scissors is that part of the mane may be cut as well as during the removal of the thread, resulting in undesired loss of mane. Damaging the mane, as will be apparent, is undesired as it may cause difficulties for the following session of braiding the mane. Especially when a horse competes at a regular basis, and therefore also requires regular braiding, it is of importance to keep the mane in a healthy condition.

Abovementioned drawbacks can partially be overcome by the equine grooming device which is described in EP 3456187. The device disclosed in said patent publication comprises a pin for piercing at least a part of the knot in a stitching direction and a limiter which is connected to the pin, wherein the limiter comprises a stop which is configured for engagement of a first side of the knot in order to limit the movement of the device in the stitching direction. The pin comprises a first substantially elongated part configured to be received in the knot, and a second part for securing the device with respect to the knot by forming a securing element and/or by receiving a securing element, wherein the securing element is configured to prevent movement of the pin in a direction reverse to the stitching direction. The limiter has two distal ends, wherein each distal end is configured for engaging a different strand of mane being part of the braid. The distal ends may comprise a retainer element for retaining the limiter with respect to the knot. The use of this equine grooming device enables that braiding is less labour-intensive and less time consuming compared to conventional methods.

However, practical experience have thought that above described equine grooming device experiences some drawbacks. The prior art equine grooming device is made of a relatively stiff piece of wire such that a relatively strong grooming device is obtained. This rigidity of the device is in principle a benefit, however, it has some manufacturing limitations. The design of the single piece equine device according to the prior art comprises a double material layer. Due to the stiff material of the wire it is found that it is almost unavoidable that the device comprises a gap in the region of the double material layer. The gap is typically present between the part of the wire forming the distal end and/or retaining element of the limiter and the part of the limiter forming the stop. Practical experience has thought that the gap may even increase during use of the equine grooming device. The presence of such gap has as a consequence that hair gets stuck in there which may lead to damaging of the hair and/or the equine grooming device getting stuck in the mane.

A goal of the invention is to provide an improved equine grooming device which preferably at least partially overcomes the abovementioned drawback.

An equine grooming device according to the claimed invention is defined in claim 1. Dependent claims 2-14 define advantageous embodiments of the equine grooming device according to the claimed invention.

The invention provides for this purpose an equine grooming device for keeping a horse mane's braid in a rolled up or folded knot, comprising:
- at least one pin for piercing at least a part of the knot in a stitching direction; and
- at least one limiter connected to the pin configured for engagement of a first side of the knot in order to limit the movement of the device in the stitching direction;
wherein the pin comprises:
∘ a first substantially elongated part configured to be received in the knot, and
∘ a second part for securing the device with respect to the knot by forming a securing element, wherein the securing element is configured to prevent movement of the pin in a direction reverse to the stitching direction, wherein the limiter comprises at least three retainer elements for retaining the limiter with respect to the knot, wherein the retainer elements define a prism, and wherein the limiter is at least partially made of a
   plastic material.

The equine grooming device according to the present invention has several benefits over the equine grooming device(s) known in the prior art.

A first benefit is that due to the limiter being at least partially made of a plastic material, the problem concerning the double material layer can be overcome. The limiter can for example be manufactured via moulding, preferably injection moulding, such that a uniform limiter can be obtained. Due to the choice of manufacturing the limiter at least partially from a plastic material the presence of gaps within the design can be avoided in a relatively simple manner. Hence, the problem of hairs getting trapped can be prevented.

A second benefit of the equine grooming device according to the present invention is that due to the presence of at least three retainer elements a better clamping position of the equine grooming device within the knot can be obtained. Practical experience has taught that the substantial 2D configuration of the equine grooming device according to the prior art does not provide sufficient stability during use. Due to the presence of at least three retainer elements a better retaining effect can be obtained. It is beneficial if the at least three retainer elements are positioned such that a substantially 3D configuration of the limiter is obtained. Typically, each retainer element is configured for engaging a different strand of mane which is part of the braid. Hence, if at least three retainer elements are present, co-action with each of the three strands of the braid can be obtained. This may contribute to the stability and retention of the equine grooming device with respect to the knot.

As a third benefit, in addition to abovementioned benefits, it is in particular the combination of the limiter comprising at least three retainer elements and being at least partially made of a plastic material which contributes to the prevention of hair getting trapped within or with respect to the device. The presence of at least three retainer elements may prevent the equine grooming device from undesired displacing, in particular rotational and/or pivotable displacing. The present third (or further) retainer element(s) can prevent that the limiter can pivot and/or rotate with respect to an axis defined by the pin. Rotational movement is experimentally found to be one of the causes of hair getting tangled with respect to the equine grooming device. As outlined above, the limiter being at least partially made of a plastic material may already prevent that hair can get trapped. Hence, with the combination of the equine grooming device comprising at least three retainer elements and the material choice for a plastic material it can be prevented in a sophisticated, multifaceted approach that hair gets tangled within and/or with respect to the equine grooming device.

Another, fourth, benefit of the spatial design of the limiter comprising at least three retainer elements and being made of a plastic material is that it is facilitated that the limiter can be provided with decoration(s) and/or (a) decorative element(s). Such further embodiment also forms part of the present invention as defined by the appended claims.

Additionally, it is a benefit that the limiter according to the present invention is relatively easy and cheap to produce. The limiter may for example be manufactured via moulding, preferably injection moulding.

Further, the limiter and the securing element are typically configured to enclose the knot at least partially. Enclosing at least part of the knot between the limiter and the securing element the device ensures that the horse mane's brain may easily be kept in the knot at a preferred degree of tightness regardless the dimensions of the knot. It is to be understood that mane of a horse are often not uniform in thickness over the full neck, resulting in varying dimensions of the plurality of knots of a horse. It is preferred that all knots have a similar degree of tightness as this is enhances the welfare of the horse. It is for example very difficult to obtain a uniform degree of tightness of fastening of knots when using elastic bands or needle and thread. This problem can be overcome by using a device according to the invention. The limiter may in a preferred embodiment comprise at least one stop or stop surface which is configured for engagement of a first side of the knot in order to limit the movement of the device in the stitching direction.

The pin of the equine grooming device according to the present invention is typically made of metal. The use of metal is preferred since metal is relatively cheap and can provide both sufficient rigidity and flexibility which are respectively required for retaining the knot and for formation of the securing element. The pin typically has a substantially cylindrical shape as this may increase the ease of protruding of the equine grooming device through the knot. In a possible embodiment of the device comprises the second part of the pin at least one groove, or any other type of deformation, at at least one predetermined position in order to allocate and/or to simplify deformation. The presence of such groove or other type of deformation may thus enhance the ease of use.

It is conceivable that at least part of the pin is made of metal. The pin may for example comprise a plastic cover. It is also conceivable that the pin is a plastic coated metal pin. The plastic coating or cover can have a protective function for the pin. The use of a plastic coating or cover may for example prevent the metal from rusting. It may also enable better gripping of the pin by the user. Further, the plastic material can be provided in any desired colour. Non-limiting examples of colours are black, brown, white, silver.
This use of colours is beneficial for aesthetic reasons. It is for example also conceivable that at least part of the pin has a colour such that it can be camouflaged with respect to the horse's mane. This means that at least part of the pin can be provided in for example black, brown, chestnut, white and/or grey.

Forming a securing element may be done by deforming at least part of the second part of the pin. This has as a benefit that the chance that the knots are fastened too tight or too loose is little, as the deformation may be easily adapted to the dimensions of the knot. Preferably the pin is therefore of substantial rigidity such that the pin may be deformed by the user when a force is applied, but may also remain substantially straight while the pin pierces the knot.

In a further preferred embodiment, the limiter comprises a receiving space for receiving at least part of the pin. Such receiving space may provide an adequate mutual connection between the limiter and the pin. Preferably, the receiving space encloses at least part of the pin. It is beneficial if the receiving space at least partially has the shape of a cylinder. The limiter and the pin may for example be mutually connected by means of a clamping connection and/or by means of an adhesive. It is for example conceivable that an adhesive, such as glue, is used to attach the pin with the limiter, or vice versa. In a further preferred embodiment, the pin comprises at least one cam for retaining the pin with respect to the limiter, in particular when at least part of the pin is received within the receiving space. It is for example possible that at least one cam is a circumferential cam. The cam(s) may provide for a clamping engagement between the pin and the limiter. It is for example conceivable that the diameter of the pin at the position of the cam is larger than an inner diameter of the receiving space of the limiter. Hence, a clamping engagement and/or clamping connection between the pin and the limiter can be obtained in a relatively simple and non-destructive manner. It is for example possible that the pin comprises a plurality of circumferential cams which are positioned at a predetermined mutual distance. Hence, a relatively firm connection between the pin and the limiter can be provided for in a relatively simple manner. The connection between the limiter and the pin is in a preferred embodiment such that the connection is not (easily) releasable. Hence, a sufficient connection between both device elements should preferably be provided for such that the pin and limiter cannot get detached during use.

As outlined above, a benefit of the equine grooming device according to the present invention is that it is facilitated that the limiter can be provided with decoration(s) and/or (a) decorative element(s). The invention also relates to an embodiment of the equine grooming device comprising at least one decorative element. An embodiment of the equine grooming device is for example possible wherein the device comprises at least one top structure. In a further preferred embodiment the top structure is releasably connected or connectable to the limiter. The top structure is typically positioned at a side of the grooming device which faces away from the knot, when in use. Hence, the top structure is typically positioned at a side of the equine grooming device which is opposite of a side thereof which engages the knot.

Preferably, the limiter comprises at least one support surface configured to support at least part of the top structure. At least part of the support surface may be substantially flat. The support surface is preferably positioned at a side of the limiter opposing the stop surface, if applied.

The top structure is preferably (releasably) connected to or connectable to the limiter of the equine grooming device. The top structure may for example be connectable to the limiter by means of a snap connection. It is also conceivable that the top structure is connectable to the limiter by means of a click connection. It is beneficial if a snap, click and/or clamping connection is applied, since such connection is relatively simple whilst it may provide a sufficiently strong mutual connection between the equine grooming device and the top structure. In a preferred embodiment, the top structure comprises a clamping element which is configured to be clamped onto the limiter. The clamping element may for example comprise at least one clamping member. Such clamping member can for example be clamping finger. It is conceivable that at least one clamping member is configured to clampingly engage at least part of the limiter. It is also conceivable that the clamping element comprises multiple clamping elements which are each configured to clampingly engage at least party of the limiter. In a possible embodiment, the number of clamping members, or clamping fingers, equals the number of retainer elements of the limiter. Hence, a stable mutual connection between the clamping element and the limiter can be obtained. The clamping element is preferably configured for clamping at a central part of the limiter. This may also contribute to a solid and stable mutual connection.

It is also conceivable that the top structure and the limiter are mutually connected or connectable via at least one bayonet connection, bayonet connector or bayonet mount. A bayonet connector enables that the top structure and limiter of the equine grooming device can be releasably connected in a relatively simple manner. It is for example possible that the limiter comprises at least one, and preferably at least three protruding tabs, and wherein the top structure comprises at least one, and preferably at least three slots, or vice versa, wherein each tab can be inserted into a corresponding slot preferably from a single orientation. At least one, and preferably all slots may be L-shaped slots. The tab(s) and slot(s) are preferably configured to enable a locking connection between the top structure and the limiter via a rotational movement. In case the limiter comprises tabs, the tabs may for example be positioned at or near the circumference of the limiter.

The limiter may comprise at least one aligning member and the top structure may comprise at least one complementary counter-aligning member. Said aligning member and counter- aligning member could in particular be configured to facilitate mutual aligning of the top structure and the limiter. It is for example conceivable that the aligning member is a cam member, or a protrusion, and wherein the counter-aligning member is a recess, or vice versa. The recess could in particular be configured to receive at least part of the cam member, or protrusion. The use of a combination of a cam member and a recess further allows rotational movement between top structure and limiter in controlled manner. This could be beneficial in case a type of interlocking means which requires rotation is applied. It is also conceivable that at least one aligning member comprises at least one inclined guiding surface configured for guiding at least part of the top structure into a desired position.

In another preferred embodiment, the top structure comprises at least one decorative element. Non-limiting examples of decorative element are a pearl, a (glass) stone, a plastic element, a crystal, a glitter element, a bead, a diamond, a Swarovski element, a wool element, a ribbon and/or a bow. The presence of a decorative element may enhance the aesthetic appearance of the equine grooming device. The decorative element is preferably centrally positioned with respect to the limiter. This embodiment may further contribute to the aesthetic appearance of the equine grooming devices when used for adjacent knots, since a consistent sequence of decorative elements can be obtained. This is typically desired for showing, dressage or carriage competitions.

In a further beneficial embodiment, the decorative element and the clamping element are detachably connected. This may for example be done by means of a snap, click and/or screw connection. Such embodiment is beneficial since it enables that the decorative element can be detached from the clamping element. Hence, it is relatively simple to change the decorative element. The equine grooming device may be used more than once, however, the device should typically be disposed at some point when the pin is not sufficiently strong anymore. In this case, the decorative element can be used in combination with another equine grooming device, i.e. another pin and limiter combination.

Possibly, the decorative element comprises at least one coupling member and the clamping element comprises at least one counter coupling member, wherein the coupling member and the counter coupling member are configured for providing a mutual detachable coupling. In this way, a relative simple but convenient connection between the decorative element and the clamping element can be obtained. The coupling member of the decorative element may for example be an internal screw thread, and the counter coupling member of the clamping element then being an external screw thread, or vice versa.

It is also conceivable that the top structure comprises at least one decorative element and at least one clamping element which are mutually connectable with the interposition of at least one support element. Such support element may for example provide an improved support and/or co-action between the clamping element and the decorative element. If the decorative element is for example a pearl, or any other element which is relatively difficult to attach, the support member may provide a better connection possibility. The support element may for example be connected to the decorative element, preferably in a non-destructive manner, and the support element can subsequently be releasably connected to the clamping element. The decorative element may for example be clampingly engaged
by the support element. It is also conceivable that the decorative element is attached to the support element by means of an adhesive, such as glue.

It is also conceivable that the support element and the decorative element are mutually connectable by means of a coupling member and a counter coupling member, and/or that the support element and the clamping element are mutually connectable by means of a coupling member and a counter coupling member.

An equine grooming device wherein the support element comprises at least one secondary clamping member configured for clampingly holding at least one decorative element, and at least one secondary coupling member, and wherein the clamping element comprises at least one secondary counter coupling member, wherein the secondary coupling member and the secondary counter coupling member are configured for providing a mutual detachable coupling is also conceivable.

The top structure can be made of a single piece. It is also conceivable that the clamping element and/or the support element form integral part of the top structure. It is also conceivable that the top structure is a two-piece element. The support element may for example also form integral part of the clamping element. It is also conceivable that the decorative element is glued onto the clamping element. Preferably, at least part of the top structure is made of a plastic material. This would result in a relatively cheap and simple to produce product. It in particular beneficial if the clamping element and the support element, if applied, are made of a plastic material.

Preferably, at least one, and preferably all retainer elements are at least partially flexible. It is for example conceivable that the outer part of the retainer elements is flexible. With the outer part, the part near the distal end of the retainer element is meant. For example, the distal end of each retainer element can be substantially flexible. It is for example possible that at least one and preferably all retainer elements taper towards the distal end. The retainer element can for example have a substantially square cross section. This could provide sufficient rigidity to the retainer element whilst the retainer element still have some flexibility.

Preferably, at least one retainer element, and preferably all retainer elements have a length of at least 0.5 cm, preferably at least 0.8 cm, more preferably at least 1 cm. It is also preferred that at least one, and preferably all retainer elements have a length smaller than 2cm, preferably smaller dan 1.7 cm and more preferably smaller than 1.4 cm.

According to the claimed invention, the at least three retainer elements define a prism. The prism is preferably defined such that the pin of the equine grooming device is in the centre of prism. Such embodiment provides a relatively stable configuration, whereof the device as such can benefit during use. It is experimentally found that the retaining capacity of the retainer element is positively influenced by such prism shape. In a further preferred embodiment, the limiter comprises three retainer element which are positioned such that a triangular prism is defined by said retainer element. It would further be beneficial if the retainer elements are positioned such that the mutual distance between a retainer element and its adjacent retainer elements is equal. This may further contribute to the retaining capacity of the equine grooming device.

The equine grooming device typically comprises three retainer elements. However, it is also conceivable that the device comprises for example four or five retainer elements. It is also conceivable that the applied, at least three, retainer elements vary in length. This may also contribute to the stability of the device during use.

In another possible embodiment it is conceivable that the distal end of each retainer element is substantially rounded. With such embodiment it can be prevented that the user and/or the horse might get punctured or hurt in any other way when handling and/or using the equine grooming device. It is also possible that the distal end of the pin is substantially rounded for similar reasons.

A part of the limiter is substantially Y-shaped in a further preferred embodiment. It is for example possible that the part of the limiter to which the retainer elements are attached is substantially Y-shaped. The legs of the Y may be of a substantially equal length. Part of the limiter being substantially Y-shaped is beneficial for multiple reasons. Such shape is for example relatively material efficient. Further it may provide multiple spatially divided contact areas in relation to the knot. The retainer elements may for example be positioned at the distal ends of the substantially Y-shaped limiter. Such embodiment typically comprises three retainer elements. It is beneficial if the Y-shape is strengthened near the core thereof. The core is typically the central part of the Y-shape. It is conceivable that part of the limiter defines a triangle, in particular an equilateral triangle.

It is possible that the second part of the pin comprises at least one groove at a predetermined position in order to allocate deformation. The presence of such groove or other type of deformation may enhance the ease of use.

The invention also relates to an embodiment wherein securing the device with respect to the knot is done by receiving a securing element, wherein the securing element is configured to prevent movement of the pin in a direction reverse to the stitching direction.

The device according to the present invention can be applied via a method comprising the steps of providing a section of mane of a horse with a braid, rolling or folding the braid into a knot, pulling the pin of the equine grooming device through the knot in a stitching direction such that the second part of the pin protrudes from the knot, and securing the device with respect to the knot by forming a securing element. Hence, also disclosed is
such method for use of an
equine grooming device as described above for keeping a horse mane's braid in a rolled up or folded knot. Such a method
comprises the subsequent steps of providing a section of mane of a horse with a braid, rolling or folding the braid into a knot, pulling the pin of the device through the knot in a stitching direction such that the second part of the pin protrudes from the knot, and securing the device with respect to the knot by forming a securing element and/or by receiving a securing element. The method may also comprise the steps of un-securing of the device and removal of the device by pulling and/or pushing the device out of the knot in a direction reverse to the stitching direction. The device may be secured with respect to the knot by deforming at least part of the second part of the pin. Possibly, the securing may be done by applying a releasable securing cap to the second part of the pin. For the advantages of the method reference is made to the advantages as already mentioned before in relation to the equine grooming device according the present invention.

The invention will be further elucidated herein below on the basis of the non-limitative exemplary embodiments shown in the following figures. Herein shows;
figure 1 an equine grooming device according to the prior art;
figures 2a and 2b an example of an equine grooming device according to the present invention;
figure 3 shows a perspective view of another example of an equine grooming device according to the present invention;
figures 4a and 4b shows a schematic representation of the top structure as shown in figure 3;
figure 5 an example of a further embodiment of an equine grooming device according to the present invention; and
figures 6a and 6b an example of a top structure.

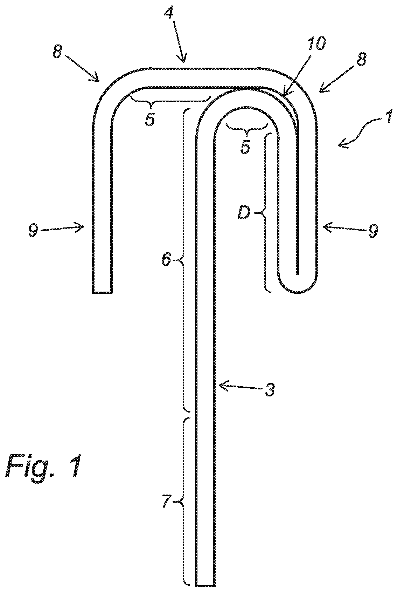

Figure 1 shows an equine grooming device (1) according to the prior art. The device (1) comprises a pin (3) for piercing at least a part of a knot (not shown) in a stitching direction and a limiter (4) connected to the pin (3). The limiter (4) comprises a stop (5) configured for engaging a first side of the knot. The pin (3) comprises a first substantially elongated part (6) configured to be received in the knot and a second part (7) for securing the device (1) with respect to the knot by forming a securing element and/or by receiving a securing element (not shown). The limiter (4) comprises two distal ends (8) which are configured for engaging a strand of mane being part of the braid. Each distal end (8) comprises a retainer element (9). The retainer elements (9) are pin-like elements, which are configured to be received in the knot. The second part (7) of the pin (3) is configured to be deformed in order to form a securing element. The equine grooming device (1) is manufactured out of a single piece of wire. A drawback of the device (1) according to the prior art is that due to the device (1) being manufactured out of a single piece of wire, the formation of a gap (10) where the wire is folded is inevitable. The region (D) where a double material layer is present is also found a likely area where a gap (not shown) can be formed.

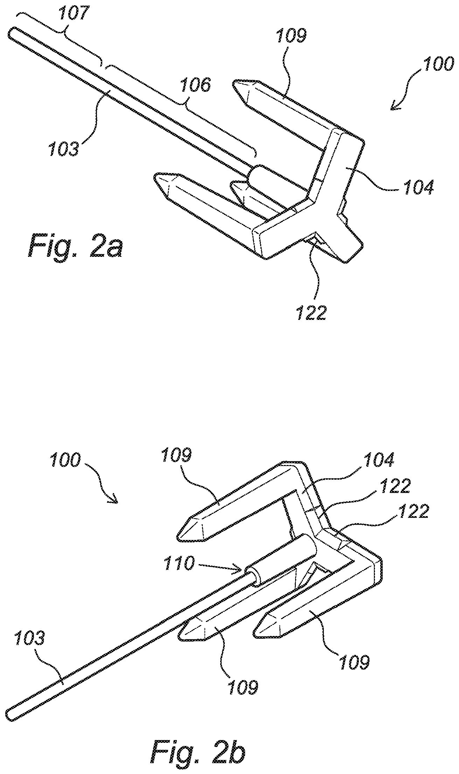

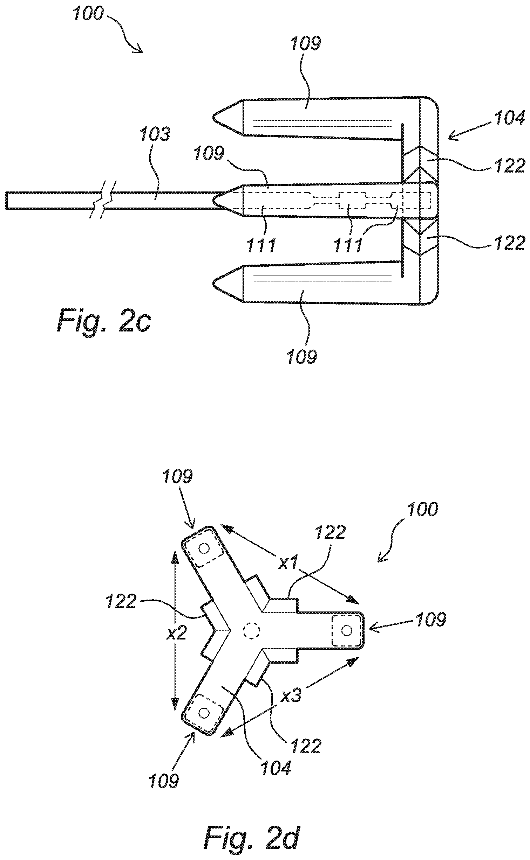

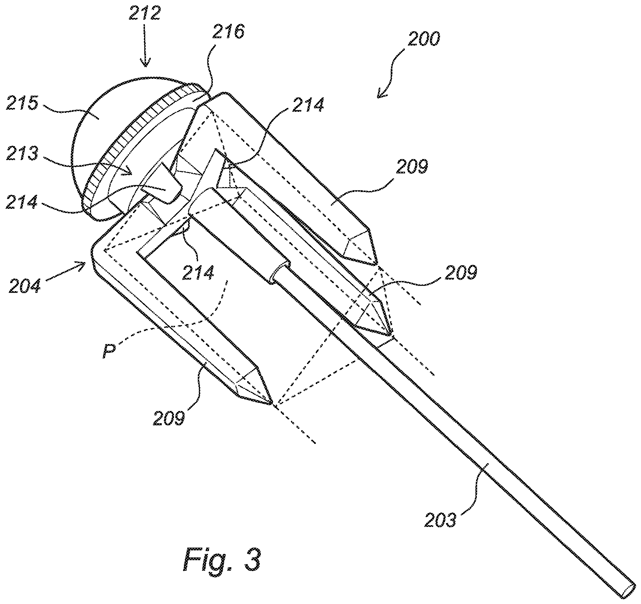

Figures 2a and 2b show each a perspective view of a first example of an equine grooming device (100) according to the present invention. Figure 2c shows a cross sectional side view of the device (100) and figure 2d shows a top view thereof. The equine grooming device (100) is configured for keeping a horse mane's braid in a rolled up or folded knot. The device (100) comprises a pin (103) for piercing at least a part of the knot in a stitching direction and a limiter (104) connected to the pin configured for engagement of a first side of the knot in order to limit the movement of the device (100) in the stitching direction. The pin (103) comprises a first substantially elongated part (106) configured to be received in the knot, and a second part (107) for securing the device (100) with respect to the knot by forming a securing element. The securing element is configured to prevent movement of the pin (103) in a direction reverse to the stitching direction. The limiter (104) comprises, in the shown embodiment, three retainer elements (109) for retaining the limiter (104) with respect to the knot. The limiter (104) is made of a plastic material and the pin (103) is made of metal. The pin (103) has a substantially cylindrical shape. The limiter (104) comprises a receiving space (110) for receiving at least part of the pin (103). It can be seen that part of the pin (103) is received in said receiving space (110) of the limiter (104). The distal end of each retainer element (109) is substantially rounded. The cross section of figure 2c shows that the pin (103) comprises multiple cams (111) for retaining the pin (103) with respect to the limiter(104). The cams (111) are received in the cylindrical receiving space (110). The cylinder defining the receiving space (110) clampingly encloses the cams (111). The top part of the limiter (104) is substantially Y-shaped and the retainer elements (109) are positioned at the distal ends of the Y-shaped limiter (104). The Y-shape is strengthened near the core of the Y. This can be clearly seen in the top view of the limiter (104) of figure 2d. A further benefit of this type of core is that it can also be used to facilitate clamping of a top structure thereon, which is shown in figure 3. The retainer elements (109) are positioned such that the mutual distance (x1, x2, x3) between a retainer element (109) and its adjacent retainer elements (109) is substantially equal. The device (100) as shown further comprises multiple aligning members (122). In the shown embodiment, each aligning member (122) comprises inclined guiding surfaces (122) configured for guiding at least part of the top structure (not shown) into a desired position.

Figure 3 shows a perspective view of another embodiment of an equine grooming device (200) according to the present invention. The device (200) comprises a pin (203) and a limiter (204) as described in figures 2a-2d. The figure shows that the retainer elements (209) define a triangular prism (P). The pin (203) is present in the centre of the prism (P) defined by the retainer elements (209). The device (200) comprises a top structure (212) which is releasably connected to the limiter (204). The top structure (212) is in the shown embodiment connected to the limiter (204) by means of a snap connection. The top structure (212) comprises a clamping element (213) which is clamped onto the limiter (204). The clamping element (213) comprises multiple clamping members (214). Each clamping member (214) is clamped at the central part of the limiter (204). The top structure (212) also comprises a decorative element (215). In the shown embodiment, the decorative element (215) is a bead. The decorative element (215) and the clamping element (213) are mutually connectable with the interposition of a support element (216).

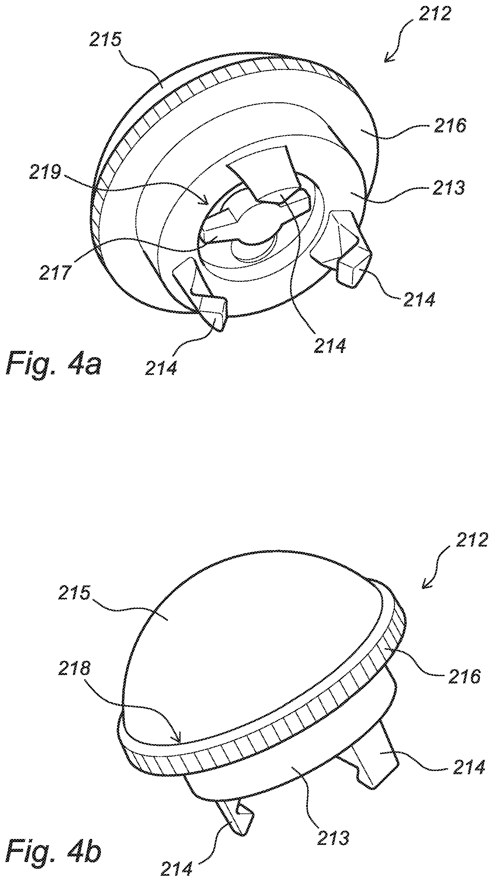

Figures 4a and 4b shows a schematic representation of the top structure (212) as shown in figure 3. The top structure (212) comprises a decorative element (215) and a clamping element (213) which are mutually connected via the interposition of a support element (216). Figure 4a shows a bottom side of the top structure (212) wherein it can be seen that the support element (216) and the clamping element (213) are releasably connected. The support element (216) comprises a secondary coupling member (217) and the clamping element (213) comprises a secondary counter coupling member (219). The secondary coupling member (217) and the secondary counter coupling member (219) are configured for providing a mutual detachable coupling between the support element (216) and the clamping element (213). In the shown embodiment, the support element (216) and the clamping element (213) can be connected or detached by means of a rotational movement. The support element (216) further comprises a secondary clamping member (218) configured for clampingly holding the decorative element (215). The secondary clamping member (218) is present in the form of a circumferential clamping edge (218), which is configured to hold the decorative element (215) in a non-destructive manner. The outer edge of the support element (216) comprises a structure, which is beneficial for handling purposes and contributes to the aesthetic appearance of the top structure (212). The clamping element (213) comprises multiple clamping members (214). The clamping members (214) are configured for co-action with the limiter of the equine grooming device (not shown), in particular a core or central area of the limiter. In the shown embodiment are the parts (213, 216, 215) of the top structure (212) made of a plastic material.

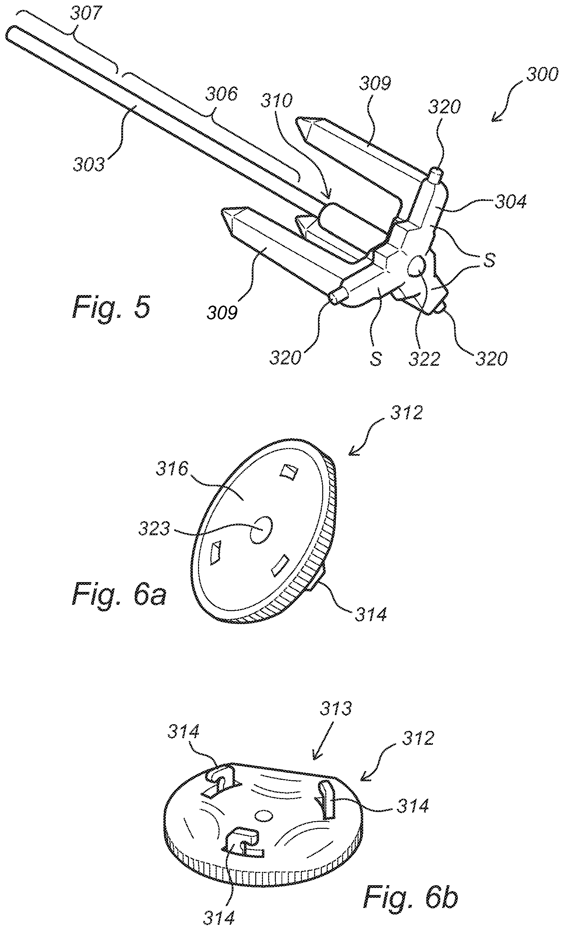

Figure 5 shows an example of a further embodiment of an equine grooming device (300) according to the present invention. The device (300) is substantially similar to the device as shown in figures 2a-2d. The device (300) comprises a pin (303) for piercing at least a part of the knot in a stitching direction and a limiter (304) connected to the pin configured for engagement of a first side of the knot in order to limit the movement of the device (300) in the stitching direction. The pin (303) comprises a first substantially elongated part (306) configured to be received in the knot, and a second part (307) for securing the device (300) with respect to the knot by forming a securing element. The securing element is configured to prevent movement of the pin (303) in a direction reverse to the stitching direction. The limiter (304) comprises, in the shown embodiment, three retainer elements (309) for retaining the limiter (304) with respect to the knot. The limiter (304) is made of a plastic material and the pin (303) is made of plastic coated metal. The pin (303) has a substantially cylindrical shape. The limiter (304) comprises a receiving space (310) for receiving at least part of the pin (303). The limiter (304) of the shown embodiment further comprises three protruding tabs (320). The tabs (320) are configured for cooperation with the slots of top structure, for example as shown in figures 6a and 6b. In this way, the top structure and the limiter (320) can be mutually connected by means of a bayonet connection. The tabs (320) are positioned at the circumference of the limiter (304). The limiter (304) comprises a support surface S configured to support at least part of a top structure. The limiter (304) further comprises an aligning members (322). In the shown embodiment, the aligning member (322) is a cam member (322).

Figures 6a and 6b show an example of a further example of a top structure (312). Figure 6a shows a bottom side of the top structure (312) and figure 6b shows a bottom side of the top structure (312). The top structure (312) comprises three slots (314). The tabs (320) of the limiter (304) as shown in figure 5 are configured to be inserted into a corresponding slot (314). The tabs (320) can be inserted via a single orientation, in particular via a rotational movement. The slots (314) are in the shown example L-shaped slots (314). The tabs (320) and slots (314) are configured to provide a locking connection between the top structure (312) and the limiter (304), in particular via a rotational movement. The top structure (312) further comprises a complementary counter-aligning member (323). The aligning member (322) of the limiter (304) of figure 5 and the counter- aligning member (323) of the top structure (312) are configured for co-action. They facilitate mutual aligning of the top structure (312) and the limiter (304). In the shown embodiment, the counter-aligning member (323) is a recess (323). The counter-aligning member (323) is present at a central position of the top structure (312). The top structure (312) can optionally comprises a decorative element (not shown). In can be said that the top structure (312) comprises a clamping element (313) and a support element (316), wherein the support element (316) forms integral part of the clamping element (313). The clamping element (313) comprises multiple clamping members (314). The clamping members (314) are configured for co-action with the limiter of the equine grooming device (see for example figure 5). With the term "braiding", the term "plaiting" is included as well. It is further to be understood, that despite it is referred to "equine" and "horses", also donkeys, pony's, mules and other mammals comprising mane are disclosed. It is also conceivable that the device is used in human hair and/or in combination with hair extensions. Furthermore besides applying the device for braiding mane, it is equally included in the invention to apply the device for the forelock and/or the tail of a horse.

## Claims

1. Equine grooming device (100, 200, 300)
for keeping a horse mane's braid in a rolled up or
folded knot, comprising:
- at least one pin (103, 203, 303)
for piercing at least a part of the knot in a stitching direction; and
- a limiter (104, 204, 304)
connected to the pin configured for engagement of a first side of the
knot in order to limit the movement of the device in the stitching direction; wherein the pin comprises:
o a first substantially elongated part (106, 306) configured to be received in the knot,
and
o a second part (107, 307)
for securing the device with respect to the knot by forming
a securing element, wherein the securing element is configured to prevent movement of the pin in a direction reverse to the stitching direction,
and wherein the limiter is at least partially made of a plastic material; wherein
the limiter comprises at least three retainer elements (109, 209, 309) for retaining the limiter with
respect to the knot, **characterized in that** the retainer elements define a prism (P).

2. Equine grooming device according to claim 1, wherein the pin (103, 203, 303) is at least
partially made of metal, in particular wherein the pin is made of plastic coated metal.

3. Equine grooming device according to claim 1 or claim 2, wherein the limiter (104, 204, 304)
comprises a receiving space (110, 310) for receiving at least part of the pin (103, 203, 303), preferably wherein the pin comprises at least one cam (111) for retaining the pin with respect to the
limiter when at least part of the pin is received within the receiving space.

4. Equine grooming device according to any of the previous claims, comprising
at least one top structure (212, 312)
which is releasably connected or connectable to the
limiter (204, 304).

5. Equine grooming device according to claim 4, wherein the limiter (304) comprises
at least one support surface (S) configured to support at least part of the top structure (312).

6. Equine grooming device according to claim 4 or claim 5, wherein the top structure (212) is connectable to the limiter (204) by means of a snap connection and/or
wherein the top structure (312) and the limiter (304) are mutually connected or connectable via
at least one bayonet connector.

7. Equine grooming device according to any of claims 4 -6, wherein the limiter (304)
comprises at least one, and preferably at least three protruding tabs (320), and wherein
the top structure (312) comprises at least one, and preferably at least three slots (314), or vice
versa, wherein each tabs can be inserted into a corresponding slot.

8. Equine grooming device according to any of claims 4-7, wherein the top structure comprises at least one decorative element (215).

9. Equine grooming device according to any of claims 4-8, wherein the limiter comprises at least one aligning member (122, 322) and wherein the top structure comprises at
least one complementary counter-aligning member (323), wherein said aligning member
and counter- aligning member are configured to facilitate mutual aligning of the top structure and the limiter.

10. Equine grooming device according to any of the previous claim, wherein the retainer elements (109, 209, 309) are at least partially flexible.

11. Equine grooming device according to any of the previous claims, wherein at least one retainer element (109, 209, 309),
and preferably all retainer elements have a length of at least 0.5 cm, preferably at least 0.8 cm, more preferably at least 1 cm.

12. Equine grooming device according to any of the previous claims, wherein
the retainer elements (109, 209, 309)
are positioned such that the mutual distance between a retainer elements and its adjacent retainer elements is equal.

13. Equine grooming device according to any of the previous claims, wherein the distal end of each retainer element (109, 209, 309) is substantially rounded.

14. Equine grooming device according to any of the previous claims, wherein part of the limiter (104, 204, 304) is Y-shaped.

## Patentansprüche

1. **Pferdepflegevorrichtung** (100, 200, 300) zum Halten eines Pferdemähnenzopfs in einem aufgerollten oder gefalteten Knoten, umfassend:
- mindestens einen Stift (103, 203, 303) zum Durchstechen mindestens eines Teils des Knotens in einer Stichrichtung; und
- einen Begrenzer (104, 204, 304), der mit dem Stift verbunden ist, der zum Eingriff einer ersten Seite des Knotens konfiguriert ist, um die Bewegung der Vorrichtung in der Stichrichtung zu begrenzen;
wobei der Stift umfasst:
o ein erstes im Wesentlichen längliches Teil (106, 306), das dazu konfiguriert ist, in dem Knoten aufgenommen zu werden, und
o ein zweites Teil (107, 307) zum Sichern der Vorrichtung in Bezug auf den Knoten durch Bilden eines Sicherungselements, wobei das Sicherungselement dazu konfiguriert ist, eine Bewegung des Stifts in einer Richtung entgegen der Stichrichtung zu verhindern,
und wobei der Begrenzer mindestens teilweise aus einem Kunststoffmaterial besteht;
wobei der Begrenzer mindestens drei Halteelemente (109, 209, 309) zum Halten des Begrenzers in Bezug auf den Knoten umfasst, **dadurch gekennzeichnet, dass** die Halteelemente ein Prisma (P) definieren.

2. Pferdepflegevorrichtung nach Anspruch 1, wobei der Stift (103, 203, 303) mindestens teilweise aus Metall besteht, wobei der Stift insbesondere aus kunststoffbeschichtetem Metall besteht.

3. Pferdepflegevorrichtung nach Anspruch 1 oder 2, wobei der Begrenzer (104, 204, 304) einen Aufnahmeraum (110, 310) zum Aufnehmen mindestens eines Teils des Stifts (103, 203, 303) umfasst, wobei der Stift bevorzugt mindestens einen Nocken (111) zum Halten des Stifts in Bezug auf den Begrenzer umfasst, wenn mindestens ein Teil des Stifts innerhalb des Aufnahmeraums aufgenommen ist.

4. Pferdepflegevorrichtung nach einem der vorhergehenden Ansprüche, die mindestens eine Oberstruktur (212, 312), die lösbar mit dem Begrenzer (204, 304) verbunden oder verbindbar ist, umfasst.

5. Pferdepflegevorrichtung nach Anspruch 4, wobei der Begrenzer (304) mindestens eine Tragfläche (S) umfasst, die dazu konfiguriert ist, mindestens einen Teil der Oberstruktur (312) zu tragen.

6. Pferdepflegevorrichtung nach Anspruch 4 oder 5, wobei die Oberstruktur (212) mittels einer Schnappverbindung mit dem Begrenzer (204) verbindbar ist und/oder wobei die Oberstruktur (312) und der Begrenzer (304) über mindestens einen Bajonettverbinder miteinander verbunden oder verbindbar sind.

7. Pferdepflegevorrichtung nach einem der Ansprüche 4-6, wobei der Begrenzer (304) mindestens eine und bevorzugt mindestens drei vorstehende Laschen (320) umfasst, und wobei die Oberstruktur (312) mindestens einen und bevorzugt mindestens drei Schlitze (314) umfasst, oder umgekehrt, wobei jede Lasche in einen entsprechenden Schlitz eingeführt werden kann.

8. Pferdepflegevorrichtung nach einem der Ansprüche 4-7, wobei die Oberstruktur mindestens ein dekoratives Element (215) umfasst.

9. Pferdepflegevorrichtung nach einem der Ansprüche 4-8, wobei der Begrenzer mindestens ein Ausrichtelement (122, 322) umfasst, und wobei die Oberstruktur mindestens ein komplementäres Gegenausrichtelement (323) umfasst, wobei das Ausrichtelement und das Gegenausrichtelement dazu konfiguriert sind, das gegenseitige Ausrichten der Oberstruktur und des Begrenzers zu erleichtern.

10. Pferdepflegevorrichtung nach einem der vorhergehenden Ansprüche, wobei die Halteelemente (109, 209, 309) mindestens teilweise flexibel sind.

11. Pferdepflegevorrichtung nach einem der vorhergehenden Ansprüche, wobei mindestens ein Halteelement (109, 209, 309) und bevorzugt alle Halteelemente eine Länge von mindestens 0,5 cm, bevorzugt mindestens 0,8 cm, bevorzugter mindestens 1 cm aufweisen.

12. Pferdepflegevorrichtung nach einem der vorhergehenden Ansprüche, wobei die Halteelemente (109, 209, 309) derart positioniert sind, dass der gegenseitige Abstand zwischen einem Halteelement und seinen benachbarten Halteelementen gleich ist.

13. Pferdepflegevorrichtung nach einem der vorhergehenden Ansprüche, wobei das distale Ende jedes Halteelements (109, 209, 309) im Wesentlichen abgerundet ist.

14. Pferdepflegevorrichtung nach einem der vorhergehenden Ansprüche, wobei ein Teil des Begrenzers (104, 204, 304) Y-förmig ist.

## Revendications

1. Dispositif de toilettage équin (100, 200, 300) pour maintenir la tresse d'une crinière dans un nœud enroulé ou plié, comprenant :
- au moins une broche (103, 203, 303) pour percer au moins une partie du nœud dans une direction de couture ; et
- un limiteur (104, 204, 304) relié à la broche configurée pour l'engagement d'un premier côté du nœud afin de limiter le mouvement du dispositif dans la direction de couture ;
dans lequel la broche comprend :
o une première partie sensiblement allongée (106, 306) configurée pour être reçue dans le nœud, et
o une seconde partie (107, 307) pour fixer le dispositif par rapport au nœud en formant un élément de fixation, dans lequel l'élément de fixation est configuré pour empêcher le mouvement de la broche dans une direction opposée à la direction de couture,
et dans lequel le limiteur est au moins partiellement fait d'une matière plastique ; dans lequel le limiteur comprend au moins trois éléments de retenue (109, 209, 309) pour retenir le limiteur par rapport au nœud, **caractérisé en ce que** les éléments de retenue définissent un prisme (P).

2. Dispositif de toilettage équin selon la revendication 1, dans lequel la broche (103, 203, 303) est au moins partiellement en métal, en particulier dans lequel la broche est en métal revêtu de plastique.

3. Dispositif de toilettage équin selon la revendication 1 ou la revendication 2, dans lequel le limiteur (104, 204, 304) comprend un espace de réception (110, 310) pour recevoir au moins une partie de la broche (103, 203, 303), de préférence dans lequel la broche comprend au moins une came (111) pour retenir la broche par rapport au limiteur lorsqu'au moins une partie de la broche est reçue à l'intérieur de l'espace de réception.

4. Dispositif de toilettage équin selon l'une quelconque des revendications précédentes, comprenant au moins une structure supérieure (212, 312) qui est reliée ou peut être reliée de manière amovible au limiteur (204, 304).

5. Dispositif de toilettage équin selon la revendication 4, dans lequel le limiteur (304) comprend au moins une surface de support (S) configurée pour supporter au moins une partie de la structure supérieure (312).

6. Dispositif de toilettage équin selon la revendication 4 ou la revendication 5, dans lequel la structure supérieure (212) peut être reliée au limiteur (204) au moyen d'une connexion par encliquetage et/ou dans lequel la structure supérieure (312) et le limiteur (304) sont mutuellement reliés ou peuvent être reliés par l'intermédiaire d'au moins un connecteur à baïonnette.

7. Dispositif de toilettage équin selon l'une quelconque des revendications 4 à 6, dans lequel le limiteur (304) comprend au moins une, et de préférence au moins trois languettes saillantes (320), et dans lequel la structure supérieure (312) comprend au moins une, et de préférence au moins trois fentes (314), ou vice versa, dans lequel chaque languette peut être insérée dans une fente correspondante.

8. Dispositif de toilettage équin selon l'une quelconque des revendications 4 à 7, dans lequel la structure supérieure comprend au moins un élément décoratif (215).

9. Dispositif de toilettage équin selon l'une quelconque des revendications 4 à 8, dans lequel le limiteur comprend au moins un élément d'alignement (122, 322) et dans lequel la structure supérieure comprend au moins un élément de contre-alignement complémentaire (323), dans lequel ledit élément d'alignement et ledit élément de contre-alignement sont configurés pour faciliter l'alignement mutuel de la structure supérieure et du limiteur.

10. Dispositif de toilettage équin selon l'une quelconque des revendications précédentes, dans lequel les éléments de retenue (109, 209, 309) sont au moins partiellement flexibles.

11. Dispositif de toilettage équin selon l'une quelconque des revendications précédentes, dans lequel au moins un élément de retenue (109, 209, 309), et de préférence tous les éléments de retenue ont une longueur d'au moins 0,5 cm, de préférence d'au moins 0,8 cm, plus préférablement d'au moins 1 cm.

12. Dispositif de toilettage équin selon l'une quelconque des revendications précédentes, dans lequel les éléments de retenue (109, 209, 309) sont positionnés de telle sorte que la distance mutuelle entre un élément de retenue et ses éléments de retenue adjacents est égale.

13. Dispositif de toilettage équin selon l'une quelconque des revendications précédentes, dans lequel l'extrémité distale de chaque élément de retenue (109, 209, 309) est sensiblement arrondie.

14. Dispositif de toilettage équin selon l'une quelconque des revendications précédentes, dans lequel une partie du limiteur (104, 204, 304) est en forme de Y.
